# DEMANDE DE BREVET EUROPEEN

(11) **EP 3 226 387 A1**
(43) Date de publication de la demande: **04.10.2017**
(21) Numéro de dépôt: 17161623.8
(22) Date de dépôt: 17.03.2017
(51) Int. Cl.: H02K 5/14, H02K 11/25, H02K 11/04

(54) **PORTE-BALAIS POUR MACHINE ÉLECTRIQUE TOURNANTE MUNI D'UN PORTE-CAPTEUR DE TEMPÉRATURE INTÉGRÉ**

(30) Priorité: 21.03.2016 FR 1652422
(71) Demandeur: VALEO EQUIPEMENTS ELECTRIQUES MOTEUR, 94046 Créteil Cedex (FR)
(72) Inventeur: EL BARAKA, Khadija, 94046 CRETEIL (FR); JUGOVIC, Svetislav, 94046 CRETEIL (FR)

(57) **Abrégé**

L'invention porte principalement sur un porte-balais (40) pour machine électrique tournante comportant un boîtier (48) comprenant des logements (49) destinés à recevoir chacun un balai, caractérisé en ce que ledit porte-balais (40) comporte en outre un porte-capteur (52) apte à porter un capteur de température.

## Description

La présente invention porte sur un porte-balais pour machine électrique tournante muni d'un porte-capteur intégré. L'invention trouve une application particulièrement avantageuse, mais non exclusive, dans le domaine des alternateurs pour véhicule automobile. Un tel alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule. L'invention pourra également être mise en oeuvre avec un moteur de type électrique.

De façon connue en soi, un alternateur ou un alterno-démarreur comporte un carter et, à l'intérieur de celui-ci, un rotor à griffes, solidaire en rotation de manière directe ou indirecte d'un arbre, et un stator qui entoure le rotor avec présence d'un entrefer.

En outre, le carter comporte un palier avant et arrière portant chacun centralement un roulement à billes pour le montage à rotation de l'arbre du rotor. Le palier arrière porte un porte-balais muni de balais destinés à venir frotter contre des bagues d'un collecteur pour assurer l'alimentation du bobinage rotorique.

Le stator comporte un corps en forme d'un paquet de tôles doté d'encoches équipées d'isolant d'encoches pour le montage du bobinage du stator. Le bobinage statorique comporte une pluralité d'enroulements de phase traversant les encoches du corps et formant un chignon avant et un chignon arrière de part et d'autre du corps du stator. Les enroulements sont obtenus par exemple à partir d'un fil continu recouvert d'émail ou à partir d'éléments conducteurs en forme de barre, tels que des épingles, dont les extrémités sont reliées électriquement entre elles.

Afin d'assurer le pilotage de la machine électrique, un module de commande est en relation avec des modules de puissance intégrant des éléments redresseurs reliés aux différentes phases de la machine. La commande des modules de puissance est effectuée notamment en fonction de la position et de la vitesse du rotor, ainsi que de paramètres de fonctionnement du moteur thermique retournés par le calculateur moteur.

Afin de protéger thermiquement la machine électrique d'une éventuelle surchauffe, il est connu d'intégrer un capteur de température pour mesurer la température au niveau des chignons du bobinage du stator. Toutefois, l'utilisation d'un capteur rapporté positionné généralement en périphérie radiale du bobinage implique la réalisation d'étapes de montage longues et couteuses pour établir la connexion entre le capteur et le module de contrôle via une liaison filaire dédiée.

L'invention vise à remédier efficacement à cet inconvénient en proposant une machine électrique tournante comportant un porte-balais comportant un boîtier comprenant des logements destinés à recevoir chacun un balai, caractérisé en ce que ledit porte-balais comporte en outre un porte-capteur apte à porter un capteur de température.

L'invention permet ainsi, en intégrant le porte-capteur au porte-balais, de faciliter l'assemblage de la machine électrique en supprimant l'étape d'installation du capteur de température qui pourra alors être mis en place à l'intérieur de la machine électrique en même temps que le porte-balais.

En outre, l'invention permet également d'augmenter la fiabilité des mesures de température en simplifiant les connexions entre le capteur de température et un module de commande tout en garantissant un bon contact thermique entre le capteur de température et un bobinage électrique.

Selon une réalisation, la machine comporte un stator d'axe muni d'un corps doté d'encoches à travers lesquelles s'étend un bobinage qui forme de part et d'autre du corps des chignons et un porte-balais comportant un boîtier comprenant des logements destinés à recevoir chacun un balai. Dans cette réalisation, le porte-balais comporte en outre un porte-capteur comportant un capteur de température et est agencé de manière à être en contact thermique dans une direction axiale avec un des chignons du stator.

Selon une réalisation, le porte-capteur comporte, en outre, une paroi délimitant un volume creux à travers lequel passe une pièce encapsulant ledit capteur de température.

Selon une réalisation, le porte-capteur est en contact avec un des chignons via la pièce.

Selon une réalisation, ledit porte-capteur comporte, en outre, un support ayant un bras allongé raccordé au boîtier par une de ses extrémités, la paroi étant située du côté de l'extrémité libre du bras.

Selon une réalisation, ledit capteur de température est noyé dans la pièce formée d'un matériau élastique ayant des propriétés de conducteur thermique. Cela permet de garantir la mise en contact du capteur de température avec le chignon de bobinage du fait de l'effet élastique du matériau.

Selon une réalisation, ledit capteur de température est noyé dans la pièce formée d'un matériau rigide ayant des propriétés de conducteur thermique.

Selon une réalisation, la machine comporte un palier muni d'une ouverture pour le passage d'une extrémité du porte-capteur de façon à autoriser une mise en contact entre ledit porte-capteur et un des chignons.

Selon une réalisation, ledit porte-balais comporte :
- une interface de connexion pour permettre une connexion avec un module de commande,
- deux pistes d'alimentation des balais s'étendant depuis ladite interface de connexion jusqu'à des zones de soudage avec des tresses desdits balais, et
- deux pistes de mesure s'étendant depuis ladite interface de connexion jusqu'audit porte-capteur pour établir une liaison électrique avec des fils de connexion du capteur de température.

Selon une réalisation, ledit porte-capteur comporte un moyen de guidage pour guider lesdits fils de connexion dudit capteur de température jusqu'auxdites pistes de mesure correspondantes.

Selon une réalisation, ledit moyen de guidage comporte un muret s'étendant entre lesdits fils de connexion dudit capteur de température.

Selon une réalisation, ledit moyen de guidage comporte deux gorges destinées à recevoir chacune un fil de connexion dudit capteur de température.

Selon une réalisation, ledit porte-balais comporte une couche de protection recouvrant les zones de soudage avec les tresses des balais ainsi qu'une portion des pistes de mesure s'étendant dans le porte-capteur. Cela permet d'assurer une protection de l'ensemble vis-à-vis des agressions extérieures.

Selon une réalisation, ledit porte-capteur est monobloc avec ledit boîtier comportant lesdits logements desdits balais. Cela permet de faciliter la réalisation de l'ensemble qui peut être obtenu par moulage.

Selon une réalisation, ledit porte-capteur comporte un support ayant:
- un bras allongé raccordé audit boîtier par une de ses extrémités et
- une paroi située du côté de l'extrémité libre du bras délimitant un volume creux à travers lequel passe le capteur de température.

Selon une réalisation, ledit capteur de température est un capteur de type CTN.

L'invention a également pour objet une machine électrique tournante caractérisée en ce qu'elle comporte un porte-balais tel que précédemment défini.

Selon une réalisation, ladite machine électrique tournante comporte un palier muni d'une ouverture pour le passage d'une extrémité du porte-capteur.

Selon une réalisation, ladite machine électrique tournante comporte un stator muni d'un bobinage, l'ouverture est configurée de façon à autoriser une mise en contact entre ledit capteur de température et un chignon d'un bobinage suivant une direction axiale par rapport à un axe dudit stator.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 montre une vue en perspective de la partie arrière de la machine électrique tournante selon la présente invention;
La figure 3a est une vue en perspective de dessus d'un porte-balais selon la présente invention;
La figure 3b est une vue en perspective de dessous d'un porte-balais selon la présente invention;
La figure 4 est une vue en coupe longitudinale du porte-balais selon la présente invention;
La figure 5 est une vue en coupe longitudinale illustrant le positionnement du porte-capteur sur le palier arrière de la machine électrique tournante;
La figure 6a est une vue en perspective du capteur de température seul;
La figure 6b est une vue en perspective du capteur de température encapsulé dans un matériau élastique thermiquement conducteur;
La figure 7 est une vue en perspective détaillée de l'extrémité du bras du porte-capteur sans la couche de protection;
La figure 8 est une vue en perspective détaillée de l'extrémité du bras du porte-capteur recouverte d'une couche de protection.

Les éléments identiques, similaires, ou analogues conservent la même référence d'une figure à l'autre.

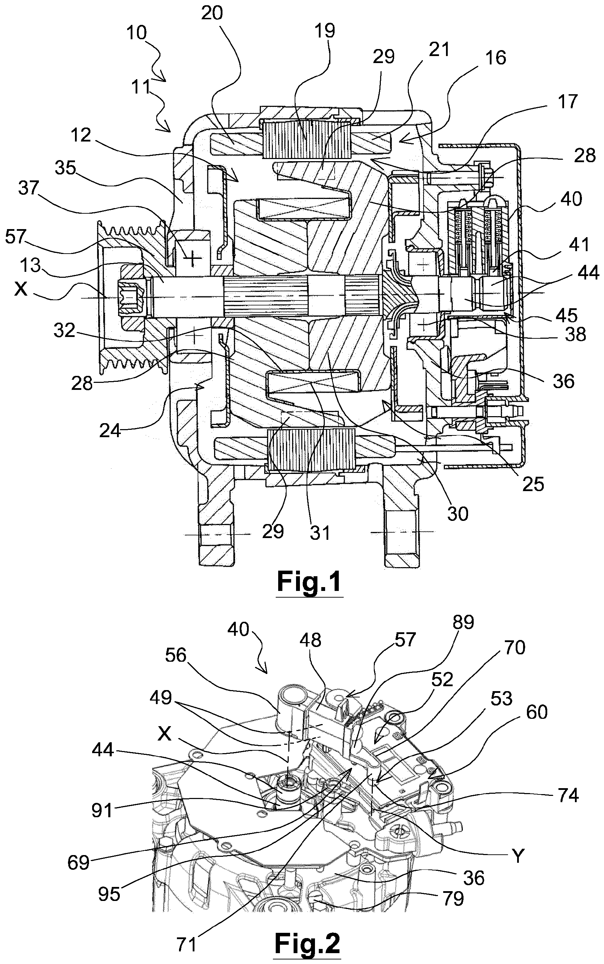

On a représenté sur la figure 1 un alterno-démarreur 10 compact et polyphasé, notamment pour véhicule automobile. Cette machine électrique pourra prendre la forme d'un alternateur 10 apte à transformer de l'énergie mécanique en énergie électrique qui pourra être réversible. Un tel alternateur réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12 monté sur un arbre 13, et un stator 16, qui entoure le rotor 12 avec présence d'un entrefer 17 entre la périphérie externe du rotor 12 et la périphérie interne du stator 16. L'axe X suivant lequel s'étend l'arbre 13 forme l'axe de rotation du rotor 12.

Le stator 16 comporte un corps 19 en forme d'un paquet de tôles doté d'encoches équipées d'isolant d'encoches pour le montage des phases du stator 16. Chaque phase comporte au moins un enroulement traversant les encoches du corps 19 du stator 16 et forme, avec toutes les phases, un chignon avant 20 et un chignon arrière 21 de part et d'autre du corps 19 du stator 16.

Les enroulements sont obtenus par exemple à partir d'un fil continu recouvert d'émail ou à partir d'éléments conducteurs en forme de barre, tels que des épingles reliées électriquement entre elles par exemple par soudage. Ces enroulements sont par exemple des enroulements triphasés connectés en étoile ou en triangle, dont les sorties sont reliées à au moins un pont redresseur comportant des éléments redresseurs tels que des diodes ou des transistors du type MOSFET.

Le rotor 12 comporte deux roues polaires 24, 25 présentant chacune un flasque 28 d'orientation transversale pourvu à sa périphérie externe de griffes 29 par exemple de forme trapézoïdale et d'orientation axiale. Les griffes 29 d'une roue 24, 25 sont dirigées axialement vers le flasque 28 de l'autre roue. La griffes 29 d'une roue polaire 24, 25 pénètrent dans l'espace existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les flasques 28 des roues 24, 25. En l'occurrence, le noyau 30 consiste en deux demi-noyaux appartenant chacun à l'un des flasques 28. Ce noyau 30 porte à sa périphérie externe une bobine d'excitation 31 bobiné dans un isolant 32 intercalé radialement entre le noyau 30 et la bobine 31.

L'arbre 13 pourra être emmanché à force dans l'alésage central des roues polaires 24, 25. Du côté de son extrémité avant, l'arbre 13 pourra comporter une partie filetée pour la fixation d'une poulie 57. La poulie 57 appartient à un dispositif de transmission de mouvements à au moins une courroie entre l'alternateur 10 et le moteur thermique du véhicule automobile.

Par ailleurs, le carter 11 comporte des paliers avant 35 et arrière 36 assemblés entre eux. Les paliers 35, 36 sont de forme creuse et portent chacun centralement un roulement 37, 38 à billes pour le montage à rotation de l'arbre 16 du rotor. Le palier arrière 38 porte un porte-balais 40 muni de balais 41 destinés à venir frotter contre des bagues 44 d'un collecteur 45 pour assurer l'alimentation du bobinage du rotor 12.

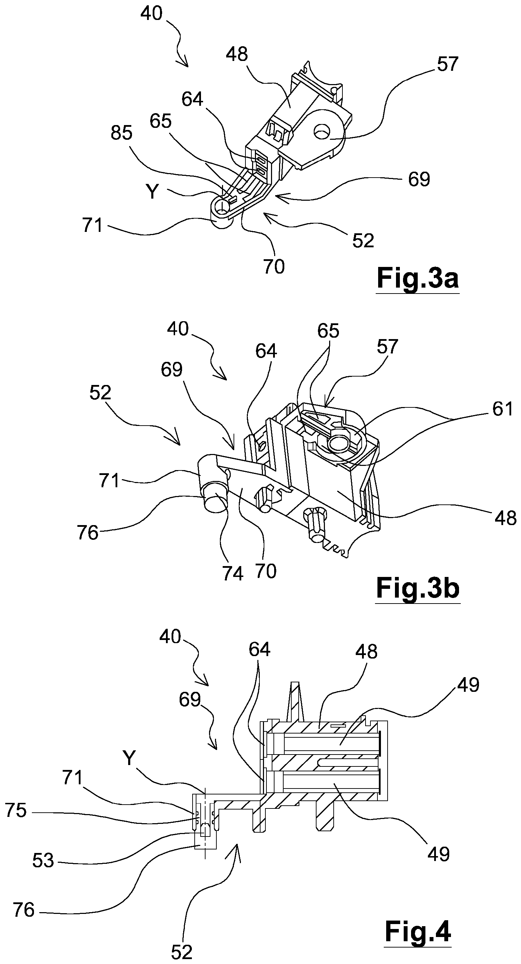

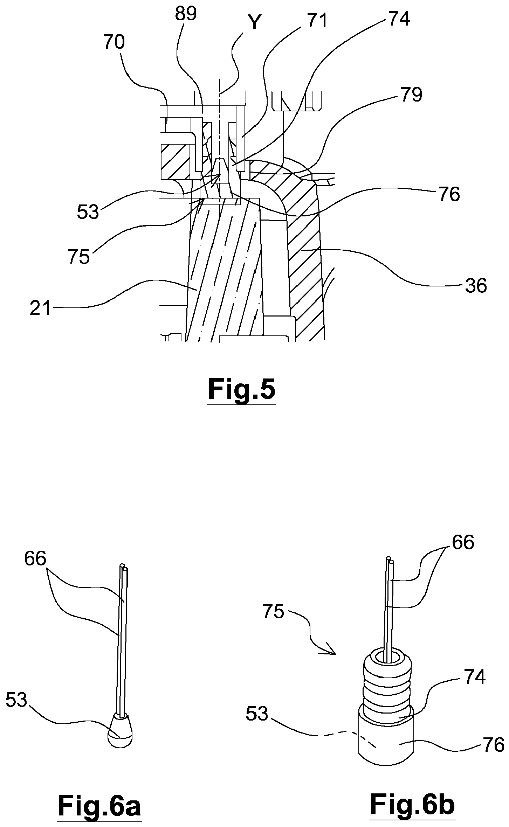

Plus précisément, on peut le voir sur les figures 2, 3a, 3b, 4, 5 et 8, le porte-balais 40 comporte un boîtier 48 ayant des logements 49 bien visibles en figure 4 destinés à recevoir chacun un balai 41. Le porte-balais 40 comporte également un porte-capteur 52 destiné à porter un capteur de température 53 tel que celui représenté en figure 6a. En outre, un élément protecteur 56 rapporté, ici de forme globalement cylindrique, pourra être fixé par exemple par encliquetage via une liaison glissière du côté de l'extrémité des balais 41 destinée à venir frotter contre les bagues 44 (cf. figure 2). Cet élément protecteur 56 positionné autour des balais 41 et des bagues 44 correspondantes permet d'assurer la protection de l'ensemble vis-à-vis de l'environnement extérieur.

Une interface de connexion 57 assure la connexion du porte-balais 40 avec un module de commande 60. Ce module de commande 60 permet, outre d'alimenter les balais 41, de contrôler des modules de puissance intégrant des éléments redresseurs prenant généralement la forme de transistor MOS reliés aux différentes phases de la machine.

Comme cela est bien visible sur la figure 3b, deux pistes d'alimentation 61 permettant d'alimenter les balais 41 s'étendent depuis l'interface de connexion 57 jusqu'à des zones de soudage 64 avec les tresses des balais 41. Du côté de leur extrémité située au niveau de l'interface de connexion 57, les pistes d'alimentation 61 pourront présenter une forme en demi-lune pour faciliter leur mise en contact avec des pistes correspondantes situées sur le module de commande 60.

En outre, deux pistes de mesure 65 s'étendent depuis l'interface de connexion 57 jusqu'au porte-capteur 52 (cf. figure 3a) pour établir une liaison électrique avec des fils de connexion 66 du capteur de température 53.

Dans un exemple de réalisation, la liaison entre l'interface de connexion 57 du porte-balais 40 et l'interface de connexion correspondante du module de commande 60 est effectuée par vissage pour garantir un placage entre les pistes 61, 65 portées par le porte-balais 40 et les pistes correspondantes 91, 95 portées par le module de commande 60 et visibles sur la figure 2.

Le porte-capteur 52 comporte un support 69 ayant un bras 70 allongé raccordé au boîtier 48 par une de ses extrémités. En outre, une paroi 71 située du côté de l'extrémité libre du bras 70 délimite un volume creux. Le volume creux présente la forme d'un cylindre ouvert à ses deux extrémités (cf. figure 3a) mais pourra en variante présenter une forme conique, une forme à section rectangulaire ou carrée, ou toute autre forme adaptée à l'application. Ce volume creux est destiné à recevoir un matériau 74 dans lequel est noyé le capteur de température 53. Ce matériau 74 est un matériau élastique ayant des propriétés de conducteur thermique. Ce matériau pourra par exemple être constitué par une résine élastomère.

Comme on peut le voir sur les figures 3b, 4, et 5, le matériau élastique 74 présente ainsi une forme complémentaire de celle du volume creux délimité par la paroi d'extrémité 71. La pièce 75 formée par le matériau 74 et le capteur encapsulé 53 comporte une portion d'extrémité 76 dans laquelle est positionné au moins en partie le capteur 53. Cette portion d'extrémité 76 dépasse par rapport à une extrémité axiale de la paroi 71 pour pouvoir venir en contact avec le chignon de bobinage 21.

Comme cela est illustré par les figures 2, 3a, 4, et 5, la paroi d'extrémité 71 présente un axe Y s'étendant perpendiculairement à la direction d'extension longitudinale du bras 70 et parallèlement à l'axe X de l'arbre 13 du rotor 12 lorsque le porte-balais 40 est installé dans la machine 10. Une telle configuration permet à la portion d'extrémité 76 de passer par une ouverture 79 prévue dans le palier arrière 36 (cf. figure 5) pour établir un contact axial avec le chignon arrière 21 de bobinage du stator 16. Les propriétés élastiques du matériau 74 permettent de garantir le contact entre le capteur 53 et le chignon de bobinage 21 en absorbant les jeux de montage des différents éléments. De plus, ce contact axial permet de réduire l'encombrement du de l'alternateur 10.

Le porte-capteur 52 est de préférence monobloc avec le boîtier 48 du porte-balais 40 de manière à former une seule et même pièce. Il sera ainsi possible de réaliser facilement l'ensemble par moulage. En variante, le bras 70 est distinct du boîtier 48 en étant assemblé à celui-ci par exemple par un système d'encliquetage.

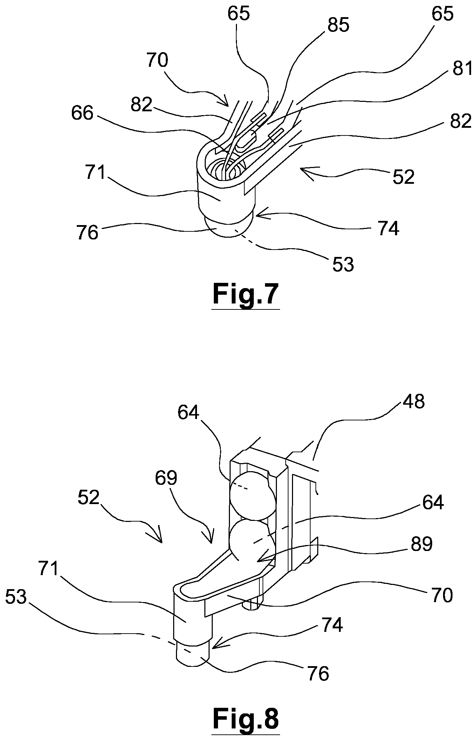

En outre, comme cela est bien visible sur la figure 7, le bras 70 présente une forme creuse à l'intérieur de laquelle s'étend une extrémité des pistes de mesure 65. Cette forme creuse ouverte du côté opposé au capteur 53 est délimitée par un fond 81 et deux bords latéraux 82 de manière à présenter une section globalement en forme de U.

On prévoit de préférence un moyen de guidage 85 pour guider les fils de connexion 66 du capteur jusqu'aux pistes de mesure 65 correspondantes. Ce moyen de guidage 85 a également pour fonction d'isoler les fils de connexion 66 l'un par rapport à l'autre.

Le moyen de guidage 85 comporte un muret s'étendant entre les deux bords latéraux 82. Ainsi, les fils de connexion 66 du capteur 53 s'étendent chacun entre le muret 85 et un bord latéral 82 correspondant. En variante, le moyen de guidage 85 comporte deux gorges creusées dans l'épaisseur du bras 70 destinées à recevoir chacune un fil de connexion 66 du capteur de température 53.

Une couche de protection 89 représentée sur les figures 2, 5 et 8 est déposée à l'intérieur du creux du bras 70 de manière à recouvrir les portions des pistes de mesure 65 s'étendant le long du porte-capteur 52. La couche de protection 89 recouvre également les zones de soudage 64 avec les tresses des balais 41. Cela permet d'assurer une protection de l'ensemble vis-à-vis de l'environnement extérieur. En outre, la couche de protection 89 a une fonction de retenue axiale de la pièce 75 contenant le capteur de température 53. La couche de protection 89 pourra par exemple être réalisée à partir d'une résine thermodurcissable.

Afin d'encapsuler le capteur 53, il sera possible de mouler dans un premier temps la pièce 75 formée par le matériau élastique 74 et contenant le capteur 53, l'ensemble étant ensuite emmanché à l'intérieur du volume délimité par la paroi d'extrémité 71. Des crans de retenue pourront éventuellement être prévus dans la périphérie interne de la paroi 71 pour retenir axialement la pièce 75. En variante, le matériau 74 est directement coulé à l'intérieur du volume creux en mettant la paroi 71 ainsi que le capteur 53 dans un moule adapté. En variante, la couche de protection 89 et le matériau 74 élastique sont constitués du même matériau et réalisés en même temps. En variante, le capteur 53 est noyé dans un matériau 74 rigide ayant des propriétés de conducteur thermique.

Le capteur de température 53 utilisé pourra par exemple être un capteur de type CTN (Coefficient de Température Négatif). Plus généralement, le capteur de température 53 pourra être constitué par un élément dont la résistance varie de façon progressive en fonction de l'évolution de la température, ou un élément pouvant prendre deux états par exemple un état ouvert et un état fermé en fonction de la température afin de protéger le système d'une éventuelle surchauffe.

Bien entendu, la description qui précède a été donnée à titre d'exemple uniquement et ne limite pas le domaine de l'invention dont on ne sortirait pas en remplaçant les différents éléments par tous autres équivalents. Dans l'exemple représenté ici le palier arrière s'étend radialement entre le porte-balai et le rotor. Toutefois l'homme du métier pourrait tout à fait envisager de positionner le porte-balais entre le palier arrière et le rotor sans sortir du cadre de l'invention.

## Revendications

1. Machine électrique tournante notamment de véhicule automobile, la machine (10) comportant :
- un stator (16) d'axe (X) muni d'un corps (19) doté d'encoches à travers lesquelles s'étend un bobinage qui forme de part et d'autre du corps (19) des chignons (20, 21), et
- un porte-balais (40) comportant un boîtier (48) comprenant des logements (49) destinés à recevoir chacun un balai (41),
la machine (10) étant **caractérisée en ce que** ledit porte-balais (40) comporte en outre un porte-capteur (52) comportant un capteur de température (53) et **en ce que** le porte-capteur (52) est agencé de manière à être en contact thermique dans une direction axiale avec un des chignons du stator (16).

2. Machine selon la revendication 1, **caractérisée en ce que** le porte-capteur (52) comporte, en outre, une paroi (71) délimitant un volume creux à travers lequel passe une pièce (75) encapsulant ledit capteur de température (53).

3. Machine selon la revendication 2, **caractérisée en ce que** le porte-capteur (52) est en contact avec un des chignons via la pièce (75).

4. Machine selon la revendication 2 ou 3, **caractérisée en ce que** ledit porte-capteur (52) comporte, en outre, un support (69) ayant un bras (70) allongé raccordé au boîtier (48) par une de ses extrémités, la paroi (71) étant située du côté de l'extrémité libre du bras (70).

5. Machine selon l'une quelconque des revendications 2 à 4, **caractérisée en ce que** ledit capteur de température (53) est noyé dans la pièce (75) formée d'un matériau (74) élastique ayant des propriétés de conducteur thermique.

6. Machine selon l'une quelconque des revendications 2 à 4, **caractérisée en ce que** ledit capteur de température (53) est noyé dans la pièce (75) formée d'un matériau (74) rigide ayant des propriétés de conducteur thermique.

7. Machine selon l'une quelconque des revendications 1 à 6, **caractérisée en ce que** le porte-balais (40) comporte :
- une interface de connexion (57) pour permettre une connexion avec un module de commande (60),
- deux pistes d'alimentation (61) des balais (41) s'étendant depuis ladite interface de connexion (57) jusqu'à des zones de soudage (64) avec des tresses desdits balais (41), et
- deux pistes de mesure (65) s'étendant depuis ladite interface de connexion (57) jusqu'audit porte-capteur (52) pour établir une liaison électrique avec des fils de connexion (66) du capteur de température (53).

8. Machine selon la revendication 7, **caractérisée en ce que** le porte-capteur (52) comporte un moyen de guidage (85) pour guider lesdits fils de connexion (66) dudit capteur de température (53) jusqu'auxdites pistes de mesure (65) correspondantes.

9. Machine selon la revendication 8, **caractérisée en ce que** ledit moyen de guidage (85) comporte un muret s'étendant entre lesdits fils de connexion (66) dudit capteur de température (53).

10. Machine selon la revendication 8, **caractérisée en ce que** ledit moyen de guidage (85) comporte deux gorges destinées à recevoir chacune un fil de connexion (66) dudit capteur de température (53).

11. Machine selon l'une quelconque des revendications 7 à 10, **caractérisée en ce que** le porte-balais (40) comporte une couche de protection (89) recouvrant les zones de soudage (64) avec les tresses des balais ainsi qu'une portion des pistes de mesure (65) s'étendant dans le porte-capteur (52).

12. Machine selon l'une quelconque des revendications 1 à 11, **caractérisée en ce que** ledit porte-capteur (52) est monobloc avec ledit boîtier (48) comportant lesdits logements (49) desdits balais (41).

13. Machine électrique tournante l'une quelconque des revendications 1 à 12, **caractérisée en ce qu'**elle comporte un palier muni d'une ouverture (79) pour le passage d'une extrémité du porte-capteur (52) de façon à autoriser une mise en contact entre ledit porte-capteur et un des chignons.
